# EUROPEAN PATENT SPECIFICATION

(11) **EP 1 233 185 B1**
(45) Date of publication and mention of the grant of the patent: **07.04.2004**
(21) Application number: 02250581.2
(22) Date of filing: 29.01.2002
(51) Int. Cl.: F04C 18/02, F01C 17/06

(54) **Oldham coupling for scroll machine**
Oldham's Kupplung für einen Spiralverdichter
Accouplement Oldham pour machine à spirales

(30) Priority: 20.02.2001 US 789202
(43) Date of publication of application: 21.08.2002
(73) Proprietor: Scroll Technologies, Arkadelphia, AR 71923 (US)
(72) Inventor: Fenocchi, David M., Arkadelphia, Arkansas 71923 (US); Barito, Thomas R., Arkadelphia, Arkansas 71923 (US)
(74) Representative: Leckey, David Herbert

(56) References cited:
- EP-A- 0 744 549
- US-A- 5 582 512
- US-A- 5 772 416
- US-A- 5 921 762
- PATENT ABSTRACTS OF JAPAN vol. 017, no. 392 (M-1450), 22 July 1993 (1993-07-22) -& JP 05 071301 A (DAIKIN IND LTD), 23 March 1993 (1993-03-23)
- PATENT ABSTRACTS OF JAPAN vol. 1996, no. 03, 29 March 1996 (1996-03-29) -& JP 07 301101 A (DAIKIN IND LTD), 14 November 1995 (1995-11-14)

## Description

### BACKGROUND OF THE INVENTION

This invention relates to an Oldham coupling which is manufactured in a simplified manner.

Scroll compressors are becoming widely utilized in refrigerant compression applications. In a typical scroll compressor a first scroll member has a base and a generally spiral wrap extending from the base. The wrap of the first scroll member interfits with a spiral wrap of a second scroll member, and the scroll member is driven to orbit relative to the first scroll member to compress an entrapped refrigerant. The orbiting movement is achieved from a rotary motor which is connected to the second scroll member through a non-rotation coupling. Typically, an Oldham coupling is provided. The Oldham coupling includes keys which slide in slot structures on the second scroll member, and which in turn has keys extending into slots in a crankcase which supports the second scroll member. In some Oldham couplings, the first scroll member receives the keys rather than the crankcase. The Oldham coupling can move in the slots in the crankcase along a linear path. This allows rotation of the drive motor to be translated into orbiting movement of the second scroll member.

Document US 5582512 discloses a compact Oldham coupling.

The Oldham coupling is a relatively simple part, but it must meet several design criteria. In particular, the Oldham coupling must have an interior bore which will allow it to slide as described above while remaining out of contact with several components of the compressor which are positioned radially inwardly of the bore's inner periphery. Moreover, the Oldham coupling ring must have sufficient wall thickness throughout its entire periphery such that the part will be sufficiently robust for reliable use. Finally, the inner periphery of the Oldham coupling ring cannot be so complex that it is difficult or unduly expensive to manufacture.

### SUMMARY OF THE INVENTION

In the disclosed embodiment of this invention, an Oldham coupling ring has a generally cylindrical inner periphery. Two opposed circular arcs are centered on a common axis, and are associated with the portions of the Oldham coupling which are received in keyways in the crankcase. The circular portions have a pair of angled portions at each of their circumferential extremes. The angled portions merge into flat portions which are positioned radially inwardly of the slots on the ring which receive keys from the orbiting scroll member. The inventive Oldham coupling ring is a relatively simple part to manufacture, in that its inner periphery is formed to be generally circular, with the angled portions on the flat portions being relatively simple portions to manufacture.

In another embodiment, there are three of the angled portions at each of the circumferential extremes. This adds additional size to the ring at the area where the angled portions are merging into the flat portions.

These and other features of the present invention can be best understood from the following specification and drawings, the following of which is a brief description.

### BRIEF DESCRIPTION OF THE DRAWINGS

Figure 1 is a cross-sectional view through a scroll compressor incorporating this invention.
Figure 2 is a plan view of an Oldham coupling according to the present invention.
Figure 3 is another sectional view.
Figure 4 shows another embodiment.

### DETAILED DESCRIPTION OF A PREFERRED EMBODIMENT

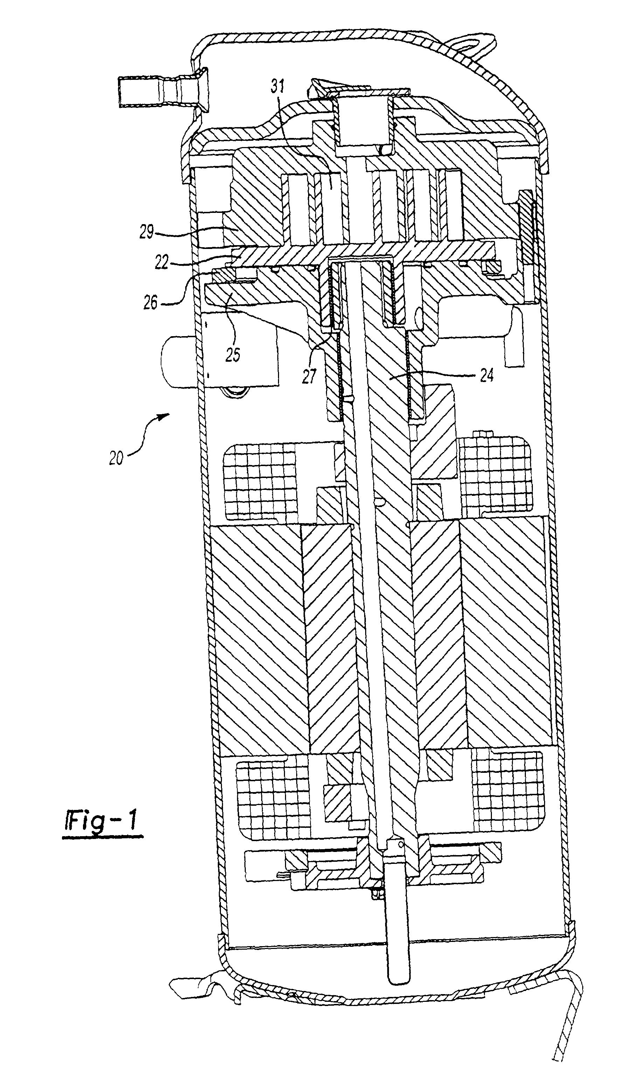

A scroll compressor 20 is shown in Figure 1 having an orbiting scroll 22 being driven by a shaft 24. An Oldham coupling 26 is positioned intermediate a crankcase 25 and the orbiting scroll 22. As is known, the shaft 24 drives the orbiting scroll 22 through a slider block connection 27. The Oldham coupling prevents the orbiting scroll 22 from rotating, and instead transmits the rotation from the shaft 24 into constrained orbiting movement of the orbiting scroll 22. As is also known, when the orbiting scroll 22 orbits, it orbits relative to a non-orbiting scroll 29. This orbiting movement compresses a refrigerant trapped in compression chambers 31.

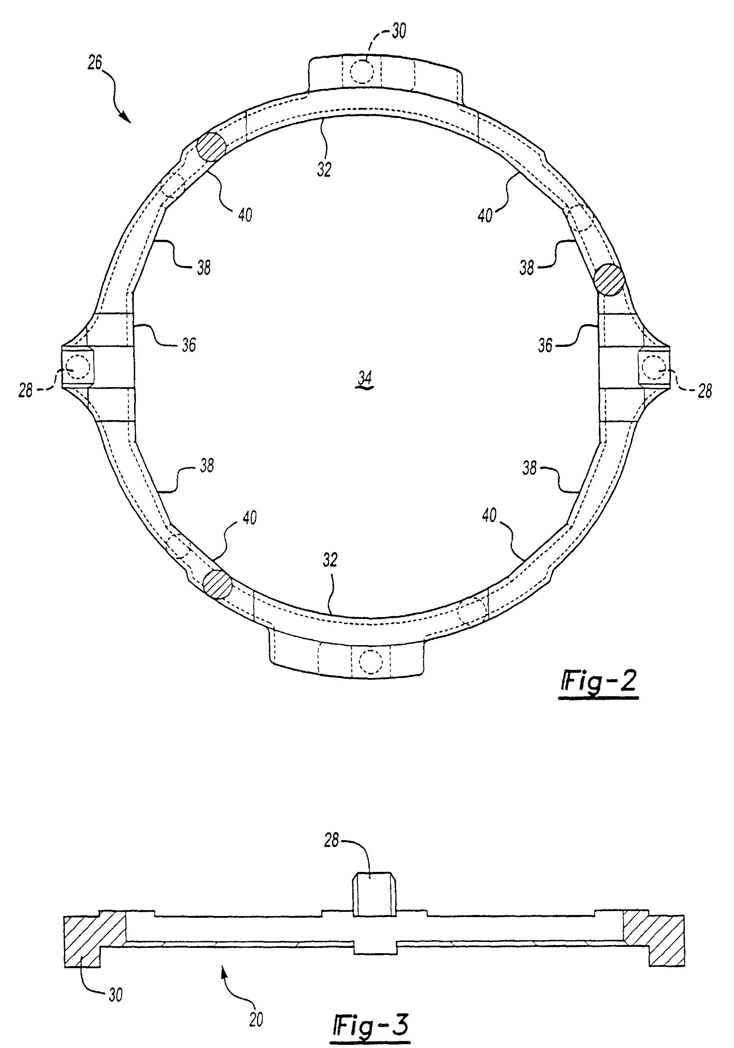

As shown in Figures 2 and 3, the Oldham coupling ring 26 functions generally as known in the art. Keyways from orbiting scroll22 receive keys 28. Keys 30 are formed at diametrically opposed positions which are spaced generally by 90° from the keys 28. The keys 30 fit into slots in the crankcase 25. As is known, during movement, the Oldham coupling ring 26 will slide vertically upwardly and downwardly in the direction illustrated in Figure 2, and within the slots of crankcase 25. This is as known in the art. During this movement, the keys 28 are guided into keyways on orbiting scroll 22, preventing the orbiting scroll 22 from rotating, and instead constrain the orbiting scroll 22 to orbit.

As can be appreciated, as the Oldham coupling 26 moves, it must avoid portions of the crankcase 25 inwardly of its bore, along with any other internal structure. Thus, it is desirable to provide sufficient clearance within the inner periphery of the ring 26 to avoid contact with any such component. The present invention provides sufficient clearance, while still maintaining an easy to manufacture configuration. As shown, opposed circular arcs 32 are positioned radially inwardly of the keys 30. The arcs 32 are each centered on a common center 34. Flat portions 36 are positioned radially inwardly of the keys 28. Angled portions 38 and 40 connect each flat 36 to one circumferential end of an arc 32. The ring 26 provides sufficient clearance space, while still providing a relatively easy to manufacture configuration. The prior art had more complex configurations, and this invention is thus an improvement. Moreover, the prior art had configurations that would often result in undesirably thin wall sections that resulted in the ring not being sufficiently robust.

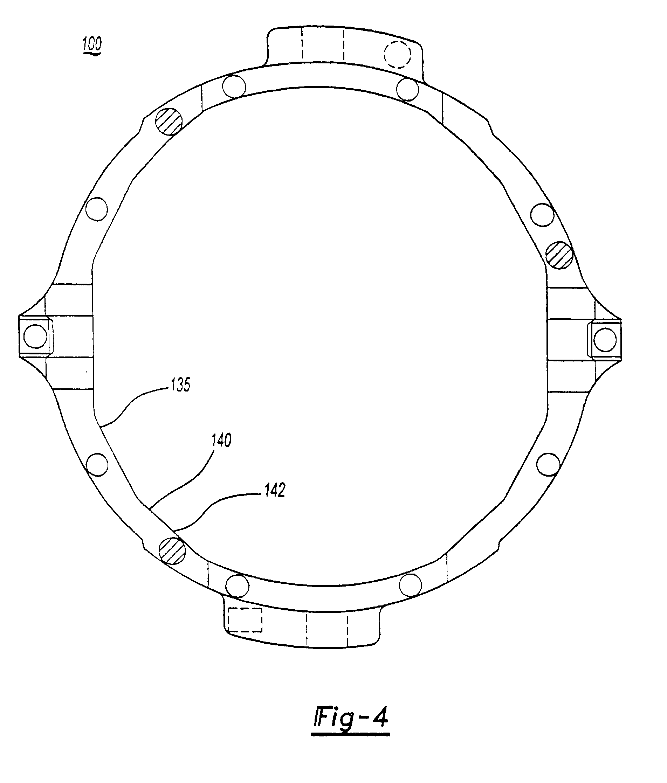

Figure 4 shows another preferred embodiment of the ring 100. In ring 100, there are three angled portions 138, 140 and 142. This provides additional wall size in the area immediately adjacent to the point where the angled portions merge into the flat portion 36.

Two preferred embodiments of this invention have been disclosed, however, a worker in this art would recognize that certain modifications would come within the scope of this invention. For that reason the following claims should be studied to determine the true scope and content of the invention.

## Claims

1. A scroll compressor (20) comprising:
a first scroll member (29) having a base and a generally spiral wrap extending from said base;
a second scroll member (22) having a base and a generally spiral wrap extending from said base, said wraps of said first and second scroll member interfitting to define compression chambers;
a shaft (24) driven to rotate, said shaft being operatively connected to drive said second scroll member (22);
a crankcase (25) for supporting said second scroll member (22); and
an Oldham coupling ring (26) positioned between a guiding structure and said second scroll member (22), said Oldham coupling ring (26) having diametrically opposed circular portions (32) centered on a common point, and having flat portions (36) spaced by 90° from said circular portions (32), **characterised by**
said flat portions (36) being connected to circumferential ends of said circular portion (36) by angled portions (38, 40; 135, 140, 142), said angled portions being line segments which are not parallel to said flat portion (36), and said Oldham coupling ring (26) being operatively connected to both said guiding structure and said second scroll member (22) to cause said second scroll member (22) to orbit when said shaft (24) rotates.

2. A scroll compressor as recited in Claim 1, wherein said guiding structure is on said crankcase (25).

3. A scroll compressor as recited in Claim 2, wherein said circular arcs (32) are positioned radially inwardly of structure to be received on said crankcase (25), and said flat portions (36) are positioned radially inwardly of structure associated with said second scroll member (22).

4. A scroll compressor as recited in Claim 3, wherein keys (30) are formed on said ring (26) and extend into slots in said crankcase (25), and said ring (26) further including keys (28) extending into slots from said second scroll member (22).

5. A scroll compressor as recited in any preceding claim, wherein there are at least two of said angled portions (38, 40; 135, 140, 142).

6. A scroll compressor as recited in Claim 5, wherein there are three of said angled portions (135, 140, 142).

7. An Oldham coupling ring for a scroll compressor, said ring comprising diametrically opposed circular portions (32) centered on a common point, and having flat portions (36) spaced by 90° from said circular portions (32), **characterised by** said flat portions (36) being connected to circumferential ends of said circular portion by angled portions (38, 40; 135, 140, 142), said angled portions being line segments which are not parallel to said flat portion (36).

8. An Oldham coupling ring as claimed in claim 7 wherein there are at least two of said angled portions (38, 40; 135, 140, 142)..

9. An Oldham coupling ring as claimed in claim 8 wherein there are three of said angled portions (135, 140, 142).

## Patentansprüche

1. Spiralverdichter (20), aufweisend:
ein erstes Spiralelement (29) mit einer Basis und einer im Allgemeinen spiralförmigen Windung, welche sich von der Basis erstreckt;
ein zweites Spiralelement (22) mit einer Basis und einer im Allgemeinen spiralförmigen Windung, welche sich von der Basis erstreckt, wobei die Windungen des ersten und des zweiten Spiralelementes derart zusammen passen, dass sie Kompressionskammern definieren;
ein Welle (24), welche angetrieben ist, um zu rotieren, wobei die Welle derart wirkmäßig verbunden ist, dass sie das zweite Spiralelement (22) antreibt;
ein Kurbelgehäuse (25) zum Abstützen des zweiten Spiralelements (22); und
einen Oldham-Kupplungsring (26), welcher zwischen einer Führungsstruktur und dem zweiten Spiralelement (22) angeordnet ist, wobei der Oldham-Kupplungsring (26) sich diametral gegenüberliegende, um einen gemeinsamen Punkt zentrierte, kreisförmige Bereiche (32) aufweist und flache Bereiche (36), welche um 90° von den kreisförmigen Bereichen (32) versetzt sind, aufweist,
**dadurch gekennzeichnet, dass** die flachen Bereiche (36) durch abgewinkelte Bereiche (38, 40; 135, 140, 142) mit umfangsmäßigen Enden des kreisförmigen Bereichs (36) verbunden sind, wobei die abgewinkelten Bereiche Liniensegmente sind, welche nicht parallel zu dem flachen Bereich (36) sind, und wobei der Oldham-Kupplungsring (26) wirkmässig sowohl mit der Führungsstruktur als auch mit dem zweiten Spiralelement (22) verbunden ist, um das zweite Spiralelement umlaufen zu lassen, wenn die Welle (24) rotiert.

2. Spiralverdichter nach Anspruch 1 und wobei die Führungsstruktur an dem Kurbelgehäuse (25) ist.

3. Spiralverdichter nach Anspruch 2, wobei die kreisförmigen Bögen (32) radial innerhalb einer an dem Kurbelgehäuse (25) aufzunehmenden Struktur positioniert sind, und die flachen Bereiche (36) radial innerhalb einer dem zweiten Spiralelement (22) zugeordneten Struktur positioniert sind.

4. Spiralverdichter nach Anspruch 3, wobei Mitnehmer (30) an dem Ring (26) gebildet sind und sich in Schlitze in dem Kurbelgehäuse (25) erstrecken, und wobei der Ring (26) ferner Mitnehmer (28) aufweist, welche sich in Schlitze von dem zweiten Spiralelement (22) erstrecken.

5. Spiralverdichter nach einem der vorhergehenden Ansprüche, wobei es wenigstens zwei der abgewickelten Bereiche (38, 40; 135, 140,142) gibt.

6. Spiralverdichter nach Anspruch 5, wobei es drei der abgewickelten Bereiche (135, 140,142) gibt.

7. Oldham-Kupplungsring für einen Spiralverdichter, wobei der Ring sich diametral gegenüberliegende, um einen gemeinsamen Punkt zentrierte, kreisförmige Bereiche (32) und flache Bereiche (36), welche um 90° von den kreisförmigen Bereichen (32) versetzt sind, aufweist,
**dadurch gekennzeichnet, dass** die flachen Bereiche (36) durch abgewinkelte Bereiche (38, 40; 135, 140, 142) mit umfangsmäßigen Enden des kreisförmigen Bereichs (36) verbunden sind, wobei die abgewinkelten Bereiche Liniensegmente sind, welche nicht parallel zu dem flachen Bereich (36) sind.

8. Oldham-Kupplungsring nach Anspruch 7, wobei es wenigstens zwei der abgewickelten Bereiche (38, 40; 135, 140,142) gibt.

9. Oldham-Kupplungsring nach Anspruch 8, wobei es drei der abgewickelten Bereiche (135, 140,142) gibt.

## Revendications

1. Compresseur à spirale (20) comprenant :
un premier élément formant spirale (29) comportant une base et un enroulement généralement en spirale s'étendant à partir de ladite base;
un second élément formant spirale (22) comportant une base et un enroulement généralement en spirale s'étendant à partir de ladite base, lesdits enroulements desdits premier et second éléments formant spirale s'insérant l'un dans l'autre pour définir des chambres de compression;
un arbre (4) entraîné en rotation, ledit arbre étant raccordé de manière à fonctionner avec ledit second élément formant spirale (22);
un carter (25) pour soutenir ledit second élément formant spirale (22); et
une bague d'accouplement Oldham (26) positionnée entre une structure de guidage et ledit second élément formant spirale (22), ladite bague d'accouplement Oldham (26) comportant des parties circulaires diamétralement opposées (32) centrées sur un point commun, et comportant des parties plates (36) espacées de 90° par rapport auxdites parties circulaires (32), **caractérisé en ce que** lesdites parties plates (36) sont raccordées à des extrémités circonférentielles de ladite partie circulaire (36) par des parties angulaires (38, 40; 135, 140, 142), lesdites parties angulaires étant des segments qui ne sont pas parallèles à ladite partie plate (36), et ladite bague d'accouplement Oldham (26) étant raccordée pour fonctionner à la fois avec ladite structure de guidage et ledit second élément formant spirale (22) pour faire orbiter ledit second élément formant spirale (22) lorsque ledit arbre (24) tourne.

2. Compresseur à spirale selon la revendication 1, dans lequel ladite structure de guidage se trouve sur ledit carter (25).

3. Compresseur à spirale selon la revendication 2, dans lequel lesdits arcs circulaires (32) sont positionnés dans le sens radial vers l'intérieur d'une structure pour être logés dans ledit carter (25), et lesdites parties plates (36) sont positionnées dans le sens radial vers l'intérieur de la structure associée audit second élément formant spirale (22).

4. Compresseur à spirale selon la revendication 3, dans lequel des clavettes (30) sont formées sur ladite bague (26) et s'étendent dans des fentes dans ledit carter (25) et ladite bague (26) comprend, en outre, des clavettes (28) s'étendant dans des fentes à partir dudit second élément formant spirale (22).

5. Compresseur à spirale selon l'une quelconque des revendications précédentes, dans lequel il y a au moins deux desdites parties angulaires (38, 40; 135, 140, 142).

6. Compresseur à spirale selon la revendication 5, dans lequel il y a trois desdites parties angulaires (135, 140, 142).

7. Bague d'accouplement Oldham pour un compresseur à spirale, ladite bague comprenant des parties diamétralement opposées (32) centrées sur un point commun, et comportant des parties plates (36) espacées de 90° par rapport auxdites parties circulaires (32),
**caractérisée en ce que** lesdites parties plates (36) sont raccordées à des extrémités circonférentielles de ladite partie circulaire par des parties angulaires (38, 40; 135, 140, 142), lesdites parties angulaires étant des segments qui ne sont pas parallèles à ladite partie plate (36).

8. Bague d'accouplement Oldham selon la revendication 7, dans laquelle il y a au moins deux desdites parties angulaires (38, 40; 135, 140, 142).

9. Bague d'accouplement Oldham selon la revendication 8, dans lequel il y a trois desdites parties angulaires (135, 140, 142).
